# EUROPÄISCHE PATENTSCHRIFT

(11) **EP 2 858 878 B1**
(45) Veröffentlichungstag und Bekanntmachung des Hinweises auf die Patenterteilung: **21.06.2017**
(21) Anmeldenummer: 13725983.4
(22) Anmeldetag: 31.05.2013
(51) Int. Cl.: B62D 5/06, B62D 5/08, B62D 5/12, B62D 5/18, B62D 7/14, B62D 13/04, F16F 1/12

(54) **LENKANORDNUNG**
STEERING ARRANGEMENT
ENSEMBLE DE DIRECTION

(30) Priorität: 11.06.2012 DE 102012209690
(43) Veröffentlichungstag der Anmeldung: 15.04.2015
(73) Patentinhaber: SAF-HOLLAND GmbH, 63856 Bessenbach (DE)
(72) Erfinder: BÜTTNER, Josef, 63857 Waldaschaff (DE); BÖHME, Lutz, 63877 Sailauf (DE)
(74) Vertreter: Müller Schupfner & Partner Patent- und Rechtsanwaltspartnerschaft mbB
(86) Internationale Anmeldenummer: PCT/EP2013/061226
(87) Internationale Veröffentlichungsnummer: WO 2013/186063

(56) Entgegenhaltungen:
- WO-A1-2008/040957
- DE-A1- 19 716 150
- DE-A1-102008 057 053
- DE-A1-102009 042 576
- DE-U1-202010 006 812
- IT-A1- VR 910 080
- US-A1- 2010 327 207

## Beschreibung

Die vorliegende Erfindung betrifft eine Lenkanordnung, einen Rückstellteil und ein Lenksystem insbesondere für Nutzfahrzeuge.

Lenkanordnungen insbesondere zum Einsatz in Nutzfahrzeugen und deren Anhängern, sind aus dem Stand der Technik hinreichend bekannt. Es wird dabei beispielsweise eine relativ zum Fahrzeugrahmen schwenkbare Anordnung, an welcher das Rad des Nutzfahrzeuges lagerbar ist, über eine Spurstange quer zur Fahrzeuglängsachse derart verlagert, dass das angeschlossene Rad eine Schwenkbewegung ausführt. Weiterhin ist aus dem Stand der Technik bekannt, eine Stabilisierungseinheit vorzusehen, welche Schwingungen der Lenkanordnung dämpft und die Lenkanordnung in eine Neutralstellung zurückführt, in welcher das Nutzfahrzeug geradeaus fährt bzw. in der die Räder um eine senkrecht zur Längsachse des Fahrzeugs stehende Achse rotieren. Weiterhin ist bekannt, die von der Spurstange aufgebrachte Kraft durch eine zusätzlich angeordnete hydraulische oder pneumatische Betätigungseinheit zu unterstützen, wobei die Betätigungseinheit auch eine sogenannte Rückfahr- oder Lenksperre gewährleistet, d.h. die Lenkanordnung des Nutzfahrzeuges ist in einer bestimmten Schwenkstellung festgelegt. Nachteilig bei den aus dem Stand der Technik bekannten Lösungen ist, dass eine Vielzahl von Baueinheiten an der Fahrzeugachsaufhängung vorgesehen sein muss, um die Vielzahl von Funktionen zu gewährleisten. Nachteilige Folgen hiervon sind ein hohes Gewicht, ein hoher Platzbedarf und, aufgrund der großen Gesamtangriffsfläche für im Fahrwerksbereich aufgewirbelte Fremdkörper, eine hohe Wahrscheinlichkeit für Beschädigungen und verringerte Lebensdauer.

Die DE 20 2010 006 812 U1, welche als nächstliegender Stand der Technik gegenüber dem Gegenstand des Anspruchs 1 angesehen wird, betrifft eine Stabilisierungsvorrichtung für Achsen von Fahrzeugen umfassend eine Hohlzylindereinheit mit einem Hohlzylinder und einem Fluid darin sowie eine Kolbeneinheit, welche einen Kolben aufweist, welcher im Hohlzylinder angeordnet ist und diesen in zumindest zwei Kammern trennt, wobei die Kolbeneinheit in Bezug auf die Hohlzylindereinheit verschieblich ist, wobei eine Vorspanneinrichtung vorgesehen ist, welche die Kolbeneinheit in Richtung einer Ursprungsposition spannt, um die Achse somit in die Ursprungsposition zu versetzen.

Die DE 10 2009 042 576 A1 betrifft eine Vorrichtung zur aktiven Spureinstellung von auf einer Radachse eines Kraftfahrzeuges angeordneten Rädern mit einer doppelt wirkenden hydraulischen Stelleinheit für die aktive Spurbeeinflussung, wobei die Stelleinheit einen Hydraulikzylinder mit einer durchgehenden Kolbenstange aufweist, auf welcher ein Stellkolben angeordnet ist, wobei an der Kolbenstange eine Federkraft angreift, um die Kolbenstange in eine Neutralstellung relativ zum Hydraulikzylinder zurückzuführen.

Die DE 10 2008 057 053 A1 zeigt eine Vorrichtung zur aktiven Spurlenkung von Fahrzeugrädern, welche einen Aktuator aufweist, der ortsfest zwischen einem Fahrzeugaufbau und zwei von dem Aktuator verschiebbaren Stelllenkern angeordnet ist, wobei der Aktuator eine Klemmeinrichtung zum Festklemmen des Stelllenkers aufweist.

Die WO 2008/040957 A1 offenbart ein Sicherheitssystem für eine lenkbare Achse, welches ein Aktuatorelement aufweist und ein Sicherungselement, wobei bei Eintreten einer vordefinierten Bedingung das Aktuatorelement die Zentrierung der Achse beziehungsweise eines von der Achse gehaltenen Rades durchführt und das Sicherungselement das Achssystem in diesem Zustand sichert.

Die IT VR 910080 A1, welche als nächstliegender Stand der Technik gegenüber dem Gegenstand des Anspruchs 11 angesehen wird, offenbart ein Rückstellelement zum Einsatz in einer Fahrzeugachse, welches teleskopartig ausgebildet ist und in seinem Inneren ein Federelement aufweist, welches mit einzelnen Abschnitten des Rückstellelements in Eingriff steht, wobei das Rückstellelement in eine Neutralstellung strebt.

Die DE 197 16 150 A1 betrifft eine Nachlauflenkachse von Fahrzeugen, deren Achskörper die Räder über, mittels einer Spurstange miteinander verbundene Lenkgabeln lagert, mit einer zwischen dem Achskörper und einem gemeinsam mit den Rädern auslenkbaren Teil wirksamen Stabilisiervorrichtung, wobei die Stabilisiereinrichtung ein ein Federelement aufweisendes Rückstellelement aufweist, welches im Betrieb ausschließlich auf Druck belastet wird.

Die US 2010/0327207 A1 offenbart einen Federkraftmechanismus, bei welchem zwei ineinander verschiebbare hohlzylinderförmige Elemente durch ein Federelement gegeneinander mit einer Kraft beaufschlagt werden, wobei weiterhin ein Stopper eingefügt werden kann, welcher eine bestimmte maximale eingefahrene Position der beiden Elemente zueinander definiert.

Aufgabe der vorliegenden Erfindung ist es, eine Lenkanordnung und einen Rückstellteil bereitzustellen, welche möglichst kompakt und leicht ist und dabei die Anforderungen an aus dem Stand der Technik bekannte Lenkanordnungen erfüllt.

Diese Aufgabe wird mit einer Lenkanordnung und einem Rückstellteil gemäß den unabhängigen Ansprüche gelöst. Weitere Vorteile und Merkmale der Erfindung ergeben sich aus den abhängigen Ansprüchen.

Erfindungsgemäß umfasst die Lenkanordnung, insbesondere zum Einsatz in Nutzfahrzeugen und deren Anhängern, eine Spurstangeneinheit, eine Krafteinheit und ein Hebelelement, wobei das Hebelelement schwenkbar an einem in einem Bezugssystem unverlagerbar angeordneten ersten Drehpunkt festgelegt ist, wobei die Krafteinheit einen Rückstellteil, einen Aktivteil und einen Dämpfteil aufweist und gegen Verlagerung längs einer Querachse relativ zum Bezugssystem gesichert ist, wobei zumindest einer der Teile eine Kraft auf die Spurstangeneinheit ausübt, um die Spurstangeneinheit längs der Querachse zu verlagern oder gegen Verlagerung längs der Querachse zu sichern, wobei die Spurstangeneinheit in einem zweiten Drehpunkt am Hebelelement schwenkbar festgelegt ist, sodass eine Verlagerung der Spurstangeneinheit längs der Querachse zu einer Schwenkbewegung des Hebelelements um den ersten Drehpunkt führt. Das Bezugssystem ist vorzugsweise ein, bezogen auf das Fahrzeug, d.h. Kraftfahrzeug bzw. Nutzfahrzeug, festgelegtes, Koordinatensystem mit einer Querachse und einer senkrecht zu dieser stehenden Längsachse. Die Querachse ist insbesondere bevorzugt senkrecht zur Geradeausfahrtrichtung des Fahrzeuges gerichtet. Bevorzugt ist am Fahrwerk des Fahrzeuges ein Hebelelement schwenkbar angeordnet, welches bevorzugt der Lenkhebel einer an sich bekannten Achsschenkellenkung ist. Der erste Drehpunkt liegt mit Vorteil in einem Zapfen oder einem Lager, welches das Hebelelement schwenkbar und unverlagerbar, bzw. gegen Translation gesichert am Fahrzeugrahmen festlegt, wobei die Schwenkbewegung des Hebelelements insbesondere bevorzugt um eine, im Wesentlichen senkrecht zu der von der Längsrichtung der Querrichtung des Bezugssystems aufgespannten Ebene stehenden, Vertikalrichtung stattfindet. Die Betätigungseinheit ist eine bevorzugt hohlzylindrisch ausgebildete Baugruppe, welche zumindest gegen Verlagerung längs der Querrichtung relativ zum Fahrzeugrahmen, bzw. relativ zum Bezugssystem, festgelegt ist. Die Betätigungseinheit umfasst erfindungsgemäß einen Rückstellteil, einen Aktivteil und einen Dämpfteil, wobei diese drei Teile insbesondere durch die von ihnen verwirklichte Funktion gekennzeichnet sind und jeweils Eingriffsmittel aufweisen, mit welchen sie bevorzugt an der Spurstangeneinheit eingreifen. Der Rückstellteil weist bevorzugt zumindest ein Rückstellelement auf, welches bevorzugt mittelbar oder unmittelbar eine Kraft auf die Spurstangeneinheit überträgt, um diese in eine Position relativ zur Betätigungseinheit bzw. relativ zum Bezugssystem zu führen, in welcher das Hebelelement in einer sogenannten Neutralstellung bzw. Geradeausfahrtstellung angeordnet ist. Die Geradeausfahrtstellung ist dabei insbesondere dadurch gekennzeichnet, dass am Hebelelement bevorzugt vorgesehene Lagerbereiche für die drehbare Lagerung von Rädern an dem Hebelelement im Wesentlichen längs bzw. parallel zur Querachse ausgerichtet sind. Mit anderen Worten ist bei Neutralstellung des Hebelelements der Lenkausschlag gleich Null. Das im Rückstellteil angeordnete Rückstellelement ist bevorzugt eine Spiralfeder, welche bevorzugt auf Druck belastet werden kann und bei einem Lenkausschlag bzw. bei einer Verschiebung der Spurstangeneinheit längs der Querachse nach links bzw. nach rechts bezogen auf das Nutzfahrzeug eine Kraft auf die Spurstangeneinheit ausübt, die diese in die Neutralstellung zurückzuführen strebt. Der Aktivteil der Betätigungseinheit dient bevorzugt der Steuerung der Verlagerung der Spurstangeneinheit relativ zur Betätigungseinheit. Bevorzugt besteht im Aktivteil eine hydraulische oder pneumatische Kopplung zwischen der Betätigungseinheit und einem bevorzugt an der Spurstangeneinheit vorgesehenen Kolben, wobei die Betätigungseinheit bevorzugt vor und hinter dem Kolben Zu- und Abfuhrkanäle zur Zufuhr und zur Abfuhr eines Arbeitsfluides aufweist. Durch Zu- bzw. Abfuhr von Arbeitsfluid in den, durch den Kolben voneinander getrennten Kammern der Betätigungseinheit, wird der Koben nach links, bzw. rechts bezogen auf die Geradeausfahrtrichtung des Nutzfahrzeuges verdrängt. Das Funktionsprinzip des Aktivteils entspricht dabei bevorzugt einem aus dem Stand der Technik bekannten Hydraulik- oder Pneumatikkolbensystem, bei welchem ein Kolbenelement in einem hohlzylinderförmigen Bauteil angeordnet ist und dieses in zwei Fluidbereiche teilt, wobei durch Zufuhr oder Abfuhr von Fluid in einen der beiden Bereiche das Kolbenelement innerhalb des hohlzylinderförmigen Bauteils verlagert wird. Alternativ zu der hydraulischen bzw. pneumatischen Auslegung des Aktivteils kann auch eine mechanische Kopplung beispielsweise durch ein Zahnelement, welches mit einem entsprechenden Zahn- oder Schneckenrad in formschlüssigem Eingriff steht, gewährleistet sein. Erfindungsgemäß ist der Dämpfteil der Betätigungseinheit dafür ausgelegt, Schwingungen und Stöße, die auf die Lenkeranordnung und/oder das Hebelelement einwirken, zu dämpfen, indem er eine Dämpfkraft auf die Spurstangeneinheit überträgt. Dabei ist es bevorzugt, dass Schwingungen mit einer bestimmten Frequenz wie zum Beispiel ausgelöst durch Unwuchten an den Rädern, welche periodische Schwingungen verursachen und im Resonanzfall eine Einschwingung des gesamten Lenksystems des Nutzfahrzeuges verursachen können, auf ein sicherheitsunkritisches Höchstmaß zu begrenzen. Bevorzugt basiert der Dämpfteil auf dem aus dem Stand der Technik bekannten Prinzip eines hydraulischen Schwingungsdämpfers, in welchem von einem Kolbenelement verdrängtes Fluid durch Ventile oder Blenden bzw. Bohrungen strömt, dabei einen Strömungswiderstand verursacht, welcher kinetischer Energie in Wärmeenergie wandelt, und auf diese Weise eine Verlagerung der zueinander beweglichen Komponenten verzögert bzw. dämpft. Bevorzugt weist die Betätigungseinheit einen inneren und einen, diesen umgebenden äußeren hohlkörperförmigen Bereich auf, wobei der Aktivteil und der Dämpfteil bevorzugt in dem inneren und der Rückstellteil im umgebenden äußeren Bereich angeordnet sind. Vorteilhaft bei der Integration von Aktivteil, Dämpfteil und Rückstellteil in die Betätigungseinheit ist die besonders kompakte Bauweise, sowie die eine Gewichtsreduzierung, da für die einzelnen Teile bevorzugt nur ein Gehäuse benötigt wird. Weiterhin bevorzugt ist der an dem Hebelelement vorgesehene Bereich zur Lagerung eines Rades in Geradeausfahrtrichtung des Fahrzeuges hinter dem ersten Drehpunkt angeordnet. Diese Anordnung wird bekanntermaßen auch als Nachlaufachse bezeichnet und dient insbesondere dazu, bei Ausfall der Hydraulik bzw. bei Nichteinwirkung einer steuernden Kraft auf das Lenksystem während der Geradeausfahrt ein Zurückschwenken der Lenkanordnung des Nutzfahrzeuges von selbst in die Neutralstellung zu erreichen. Die Ursache für diesen Vorgang ist der, auf die Geradeausfahrtrichtung bezogen hinter dem ersten Drehpunkt angreifende Rollwiderstand der Räder des Fahrzeuges, welcher die Lenkanordnung zurück in die Neutralstellung schwenkt. Bei einer Rückwärtsfahrt des Nutzfahrzeuges ist es meist erforderlich, dass die Lenkanordnung über eine Festlegungs- bzw. eine Rückfahrsperrfunktion verfügt, welche insbesondere bevorzugt durch den Aktivteil der Betätigungseinheit verwirklicht wird. Hierzu werden, sofern der Aktivteil als hydraulisches bzw. pneumatisches Bauteil ausgelegt ist, die für die Arbeitsfluidzufuhr und -abfuhr verwendeten Ventile verschlossen, wobei das in dem Aktivteil enthaltene Arbeitsfluid die Spurstangeneinheit gegen Verlagerung längs der Querrichtung sichert. Besonders bevorzugt ist die Betätigungseinheit an einer starren Achse, bzw. am starren Teil der Lenkachse des Fahrzeuges festgelegt, wobei das Bezugssystem in diesem Fall unverlagerbar zur starren Achse liegt. Weiterhin bevorzugt ist an den distalen Enden der starren Achse bevorzugt jeweils ein erster Drehpunkt, an welchem ein Hebelelement schwenkbar festgelegt ist, vorgesehen.

Bevorzugt reicht die Spurstangeneinheit durch die Betätigungseinheit hindurch und ist an ihren distalen Enden jeweils in einem zweiten Drehpunkt an je einem Hebelelement festgelegt. Insbesondere bevorzugt ist die Spurstangeneinheit in der Betätigungseinheit derart geführt, dass sie sich nur längs ihrer Haupterstreckungsrichtung relativ zur Betätigungseinheit verlagern kann. Weiterhin weist die Spurstangeneinheit bevorzugt verschiedene Eingriffsabschnitte auf, welche im Rückstellteil und/oder im Aktivteil und/oder im Dämpfteil eingreifen und von jedem dieser Teile Kräfte auf die Spurstangeneinheit übertragen. Aufgrund dieser Zusammenfassung der verschiedenen Funktionen der Lenkanordnung in der Spurstangeneinheit ist es möglich, die Lenkanordnung besonders kompakt auszulegen und zusätzliches Gewicht an der Spurstangeneinheit einzusparen. Die Spurstangeneinheit übernimmt dabei sowohl die Aktivlenkung, das heißt die Steuerung der Lenkstellung der Lenkanordnung, als auch die Stabilisierung, d.h. bevorzugt die Rückstellung der Lenkanordnung in die Neutralstellung, wie auch bevorzugt die Dämpfung von an der Lenkanordnung auftretenden Schwingungen.

Vorzugsweise ist die Betätigungseinheit schwenkbar relativ zum Bezugssystem gelagert, so dass Verlagerungskomponenten des zweiten Drehpunkts senkrecht zur Querrichtung durch eine Verschwenkung der Betätigungseinheit kompensiert werden. Die Verlagerungskomponenten des zweiten Drehpunkts senkrecht zur Querrichtung werden über die Spurstangeneinheit an die Betätigungseinheit übertragen. Diese Verlagerungskomponenten des zweiten Drehpunkts senkrecht zur Querrichtung entstehen insbesondere dadurch, dass sich der zweite Drehpunkt entlang einer Kreisbahn bewegt. Um eine Verbiegung oder eine Beschädigung der Aufhängung der Betätigungseinheit bzw. der Spurstangeneinheit zu verhindern, ist es bevorzugt, die Betätigungseinheit schwenkbar relativ zum Bezugssystem zu lagern. Die schwenkbare Lagerung kann dabei insbesondere bevorzugt durch ein Kugelgelenk oder eine aus einer Bohrung und einem eingreifendem Zapfen bestehende, bevorzugt am Fahrwerk bzw. der starren Achse festgelegte Anordnung erreicht werden.

Weiterhin bevorzugt ist es, dass die Betätigungseinheit ein Festlegungselement aufweist, welches die Betätigungseinheit senkrecht zur Querrichtung verlagerbar relativ zum Bezugssystem festlegt. Mit anderen Worten gewährleistet das Festlegungselement eine weitestgehende Sicherung der Betätigungseinheit gegen Verlagerung längs zur Querrichtung. Gleichzeitig ermöglicht es jedoch eine Verlagerung der Betätigungseinheit relativ zum Bezugssystem senkrecht zur Querrichtung. Eine bevorzugt schwenkbare und senkrecht zur Querrichtung verlagerbare Anordnung der Betätigungseinheit ermöglicht, dass bei einem Lenkausschlag zweier an der Spurstangeneinheit festgelegter Hebelelemente, die jeweiligen zweiten Drehpunkte in verschiedene Richtungen senkrecht zur Querrichtung verlagert werden können, wobei die, die Spurstangeneinheit führende Betätigungseinheit, im Bezug auf das Bezugssystem verschwenkt, und relativ zum Bezugssystem senkrecht zur Querrichtung verlagert wird. Es hat sich als zweckmäßig erwiesen, die Betätigungseinheit mittels des Festlegungsbereiches lediglich gegen Verlagerung längs der Querrichtung zu sichern, wobei eine Schwenkbewegung und eine Verlagerung senkrecht zur Querrichtung möglich bleibt. Durch die Schwenkbewegung des Festlegungselements und den sich daher auf einer Kreisbahn bewegenden Befestigungspunkt zwischen Festlegungselement und Betätigungseinheit findet tatsächlich eine leichte, im Wesentlichen vernachlässigbare Bewegung der Betätigungseinheit längs der Querrichtung statt, welche in die Auslegungen der Lenkanordnung einbezogen wird. Die Definition der Unverlagerbarkeit der Betätigungseinheit längs der Querrichtung vernachlässigt daher lediglich diesen Punkt. In einer alternativ bevorzugten Ausführungsform weist die Spurstangeneinheit ein Gelenk auf, welches einen ersten Spurstangenabschnitt und einen zweiten Spurstangenabschnitt schwenkbar aneinander festlegt, wobei der erste Spurstangenabschnitt bevorzugt in der Betätigungseinheit geführt und gegen Verlagerung quer bzw. senkrecht zur Querrichtung gesichert ist, und wobei die Betätigungseinheit unverlagerbar und gegen Verschwenken gesichert relativ zum Bezugssystem festgelegt ist. Alternativ zu der schwenkbaren bzw. senkrecht zur Querrichtung verlagerbaren Anordnung der Betätigungseinheit kann es auch bevorzugt sein, zumindest ein, insbesondere bevorzugt zwei Gelenke an der Spurstangeneinheit vorzusehen, welche je einen zweiten Spurstangenabschnitt an dem ersten Spurstangenabschnitt schwenkbar festlegen. Dabei werden die durch eine Schwenkbewegung des Hebelelements verursachten Wegkomponenten senkrecht zur Querrichtung durch Schwenkbewegungen der zweiten Spurstangenabschnitte relativ zum ersten Spurstangenabschnitt kompensiert und der erste Spurstangenabschnitt verlagert sich ausschließlich längs der Querrichtung und es ist keine schwenkbare Anordnung der Betätigungseinheit erforderlich. Insbesondere bevorzugt ist das Gelenk dabei als Kugelgelenk ausgelegt, bei welchem eine bevorzugt an dem ersten Spurstangenabschnitt vorgesehene Kugelpfanne bzw. Gelenkpfanne einen bevorzugt an dem zweiten Spurstangenabschnitt vorgesehenen Gelenkkopf bzw. Kugelabschnitt aufnimmt und schwenkbar lagert. Insbesondere bevorzugt kann bei dieser Ausführungsform die Betätigungseinheit unverlagerbar an der Fahrzeugachse bzw. dem Fahrzeugrahmen festgelegt sein, wobei diese Festlegung vorteilhafteweise weitere komplizierte Anordnungen und Bauteile vermeidet und eine hohe Lebensdauer und Verlässlichkeit bzw. Stabilität der Lenkanordnung gewährleistet.

Weiterhin bevorzugt weist der zweite Spurstangenabschnitt eine Erstreckung auf, die in einem Verhältnis von 0,3 - 1,5, bevorzugt 0,5 - 1 und besonders bevorzugt 0,7 - 0,8 zum maximalen Verlagerungsweg der Spurstangeneinheit längs der Querachse steht. Je größer dabei dieses Verhältnis ist, desto größer ist der zweite Spurstangenabschnitt relativ zum maximalen Verlagerungsweg der Spurstangeneinheit längs der Querachse, wobei insbesondere bevorzugt eine kleinere Auslenkung bzw. eine kleinere Winkeländerung bei der Schwenkbewegung des zweiten Spurstangenabschnitts zum ersten Spurstangenabschnitt stattfindet und entsprechende Kraftkomponenten, die senkrecht zur Querachse auf den ersten Spurstangenabschnitt und damit auf die Betätigungseinheit wirken, vermindert sind. Nachteilig bei einer zu großen Erstreckung des zweiten Spurstangenabschnitts kann sich jedoch ein erhöhter Bauraumbedarf bzw. eine nicht ausreichend kompakte Auslegung der Lenkanordnung auswirken. Es hat sich dabei gezeigt, dass Lenkanordnungen, die ein bevorzugtes Verhältnis von 0,3 - 1,5 der Länge des zweiten Spurstangenabschnitts relativ zur maximalen Verlagerung der Spurstangeneinheit längs der Querachse die Anforderung an eine Kompaktheit bei gleichzeitig minimierten Querkräften auf die Spurstangeneinheit bzw. auf den ersten Spurstangenabschnitt in zuverlässigem Maße erfüllt.

Ferner bevorzugt weist das Hebelelement einen sich zwischen dem ersten und dem zweiten Drehpunkt erstreckenden Hebelarm auf, wobei die längs des Hebelarms verlaufende Gerade bei Vorliegen der Neutralstellung des Hebelelements mit einem Winkel verschwenkt zur Querrichtung des Bezugssystems ausgerichtet ist und wobei der Winkel bevorzugt größer als 90° ist. Die nicht senkrechte Ausrichtung des Hebelarms des Hebelelements in der Neutralstellung dient vorzugsweise der Erzeugung des sogenannten Lenktrapezes. Hierzu ist die längs des Hebelarms verlaufende Gerade bevorzugt mit einem Winkel größer als 90° von der Querachse aus, entgegen der Geradeausfahrtrichtung des Nutzfahrzeuges geschwenkt angeordnet, wobei in der Folge das jeweils in der befahrenen Kurve außen liegende Lenkelement weniger stark aus der Neutralstellung ausgelenkt ist, als das jeweils innen liegende Lenkelement. Mit anderen Worten ist hierbei der Winkel von der Querachse, bzw. einer Parallelen zur Querachse, aus in einem der Geradeausfahrtrichtung entgegen laufenden Bogen bis hin zur Geraden, welche zwischen den ersten und den zweiten Drehpunkt schneidet, aufzuspannen. Für beispielsweise eine Nachlaufachse wird, abhängig davon ob der zweite Drehpunkt in Geradeausfahrtrichtung hinter, bzw. auf die Anordnung im Nutzfahrzeug bezogen hinter dem ersten Drehpunkt angeordnet ist oder umgekehrt, der Winkel jeweils definiert. Ist der zweite Drehpunkt in Geradeausfahrtrichtung hinter dem ersten Drehpunkt angeordnet, so wird der Winkel von der Querachse, bzw. dem nach außen in Richtung der bevorzugt vorgesehenen Räder des Nutzfahrzeuges weisenden Ende der Querachse aus entgegen der Geradeausfahrtrichtung bis hin zur längs des Hebelarms verlaufenden Geraden gemessen. In diesem Fall liegt wird die kürzere der beiden Parallelen des Lenktrapezes durch die ersten Drehpunkte begrenzt und die längere durch die zweiten Drehpunkte. Vorzugsweise liegt der Winkel der Verschwenkung des Hebelarmes relativ zur Querachse im Bereich von 91 ° - 160°, besonders bevorzugt 95° - 120° und insbesondere bevorzugt bei ca. 100° - 115°. Es hat sich gezeigt, dass diese Winkelbereiche insbesondere bevorzugt für verschiedene Fahrzeuglängen, bzw. für verschiedene Abstände der mit einer Lenkanordnung versehenen Radaufhängungen von den dahinter bzw. davor liegenden Radaufhängungen, einen optimalen Fahrkomfort, eine optimale Fahrsicherheit und einen reduzierten Reifenverschleiß ermöglichen.

Vorzugsweise ist der erste Drehpunkt vom zweiten Drehpunkt mit einer Hebellänge beabstandet, wobei die Spurstangeneinheit innerhalb eines maximalen Verlagerungsweges längs der Querachse verlagerbar ist und wobei das Verhältnis der Hebellänge zum maximalen Verlagerungsweg im Bereich von 0,7 - 1,3 bevorzugt 0,85 - 1,1 und besonders bevorzugt bei ca. 0,9 - 1 liegt. Über das Verhältnis der Hebellänge zum maximalen Verlagerungsweg der Spurstangeneinheit lässt sich insbesondere bevorzugt der mögliche Schwenkbereich des Hebelelements einstellen. So ist bei einem kleinen Verhältnis der Hebellänge zum maximalen Verlagerungsweg mit einem geringeren Schwenkbereich des Hebelelements bei gegebenem Verlagerungsweg der Spurstangeneinheit zu rechnen. Das heißt mit anderen Worten, der Lenkeinschlag des Fahrzeuges ist weniger stark und es steigt der Wendekreis bei gegebenem Verlagerungsweg der Spurstangeneinheit. Vorteilhaft bei der Wahl eines großen Verhältnis des Hebelarms zum Verlagerungsweg der Spurstangeneinheit ist dagegen, dass bei einer relativ geringen Kraft an der Betätigungseinheit das Rad des Nutzfahrzeuges über die große Hebellänge zuverlässig verschwenkt werden kann. Wird das Verhältnis dagegen klein gehalten, so sind an der Betätigungseinheit tendenziell größere Verstellkräfte nötig. In vorteilhafter Weise kann entsprechend der Anforderung an den Wendekreis des Fahrzeuges und der durch das Gewicht und die Belastung der Lenkanordnung vorgegebenen notwendigen Kräfte an der Betätigungseinheit ein optimales Verhältnis der Hebellänge zum maximalen Verlagerungsweg der Spurstangeneinheit gewählt werden.

Ferner bevorzugt weist der Aktivteil der Betätigungseinheit eine Ventilanordnung auf, über die ein Arbeitsfluid zu- und abgeführt werden kann, um über ein Kolbenelement eine Lenkkraft auf die Spurstangeneinheit zu übertragen, wobei bei geschlossener Ventilanordnung die Spurstangeneinheit gegen Verlagerung längs der Querachse gesichert ist. Bevorzugt umfasst die Ventilanordnung an der Betätigungseinheit angebrachte Bohrungen, an welchen bevorzugt Rohre bzw. Schläuche ansetzbar sind, welche wiederum zu einer Pump- bzw. Steuereinheit mit entsprechenden Ventilen führen. Wichtigste Funktion der Ventilanordnung ist dabei die Zu- und Abfuhr von Arbeitsfluid in den zylindrischen Bereich der Betätigungseinheit, in welchem ein an der Spurstangeneinheit festgelegtes Kolbenelement durch die Erzeugung unterschiedlicher Drücke im Arbeitsfluid vor und hinter dem Kolbenelement innerhalb der Betätigungseinheit verlagert wird. Indem eine Zu- oder Abfuhr von Arbeitsfluid in die Betätigungseinheit verhindert wird bzw. blockiert wird, wird auch gleichzeitig die Bewegung des Kolbenelements innerhalb des zylindrischen Bereichs der Betätigungseinheit und damit die Verlagerung der Spurstangeneinheit relativ zur Betätigungseinheit blockiert bzw. verhindert. Mit Vorteil gewährleistet der Aktivteil der Betätigungseinheit somit eine Rückfahrsperre der Lenkanordnung.

Insbesondere bevorzugt ist der Dämpfteil der Betätigungseinheit in den Aktivteil integriert und umfasst bevorzugt eine Dämpfventilanordnung, wobei die Dämpfventilanordnung und/oder die Ventilanordnung des Aktivteils zur Dämpfung der Verlagerung der Spurstangeneinheit beitragen. Zur Verwirklichung einer besonders kompakten Bauweise der Lenkanordnung kann es bevorzugt sein, den Dämpfteil der Betätigungseinheit in den Aktivteil zu integrieren und die bereits für den Aktivteil vorgesehene Ventilanordnung ebenfalls zur Dämpfung von an der Lenkanordnung auftretenden Schwingungen zu nutzen. Zusätzlich zu dieser Ventilanordnung kann es weiterhin bevorzugt sein, parallel geschaltete Dämpfventile an der Betätigungseinheit vorzusehen, welche unabhängig von der Funktion des Aktivteils beispielsweise einer eventuellen Sperrung der Arbeitsfluidströmung bei einer eingestellten Rückfahrsperre, eine Dämpfung von Schwingungen oder Stößen auf die Lenkanordnung zu ermöglichen. Alternativ bevorzugt kann der Dämpfteil auch fluidmechanisch getrennt von dem Aktivteil vorgesehen ein, wobei vorteilhafterweise auch verschiedene Arbeitsfluide, wie beispielsweise Luft oder ähnliche kompressible Medien eingesetzt werden können, um Schwingungen und Stöße zu dämpfen.

Vorzugsweise ist der Rückstellteil der Betätigungseinheit räumlich und funktional vom Aktivteil und/oder vom Dämpfteil der Betätigungseinheit getrennt. Eine räumliche Trennung des Rückstellteils vom Aktivteil bzw. vom Dämpfteil der Betätigungseinheit ist insbesondere dann gegeben, wenn der Rückstellteil in einem gesonderten Abschnitt der Betätigungseinheit benachbart zum Aktivteil und/oder zum Dämpfteil angeordnet ist, wobei das bevorzugt im Rückstellteil vorgesehene Rückstellelement in einem eigens dafür vorgesehenen Eingriffsabschnitt an der Spurstangeneinheit angreift. Vorteilhaft bei dieser Ausführungsform erweist es sich, dass der Rückstellteil gewartet und montiert bzw. demontiert werden kann, ohne eventuell im Aktivteil und/oder dem Dämpfteil vorgesehene Arbeitsfluidkreisläufe öffnen bzw. in diese eingreifen zu müssen.

Alternativ kann, um eine kompakte Bauweise zu erreichen, der Rückstellteil in den Aktivteil und/oder in den Dämpfteil integriert sein.

Weiterhin ist erfindungsgemäß ein Rückstellteil, umfassend einen ersten Zylinderabschnitt, einen zweiten Zylinderabschnitt, einen dritten Zylinderabschnitt, einen vierten Zylinderabschnitt und ein Rückstellelement, wobei zumindest die ersten drei Zylinderabschnitte hohlzylinderförmig ausgebildet sind, wobei der dritte und der vierte Zylinderabschnitt und das Rückstellelement im Wesentlichen innerhalb des ersten und des zweiten Zylinderabschnitts angeordnet und längs einer Rückstellachse relativ zum ersten und zweiten Zylinderabschnitt verlagerbar sind, wobei der zweite Zylinderabschnitt entlang der Rückstellachse in den ersten Zylinderabschnitt verlagerbar ist und der vierte Zylinderabschnitt längs der Rückstellachse in den dritten Zylinderabschnitt verlagerbar ist, wobei sich das Rückstellelement mit seinem ersten Ende an einem ersten Anschlag des dritten Zylinderelements und mit seinem gegenüberliegenden, zweiten Ende an einem zweiten Anschlag des zweiten Zylinderelements abstützt, wobei während bzw. bei bzw. nach einer Verlagerung des vierten Zylinderelements längs der Rückstellachse in Richtung des ersten Zylinderelements ein zweiter Anschlag des vierten Zylinderelements den zweiten Anschlag des zweiten Zylinderelements gegen das Rückstellelement stützt und sich das dritte Zylinderelement an einem ersten Anschlag des ersten Zylinderelements abstützt, wobei während bzw. bei bzw. nach einer Verlagerung des vierten Zylinderelements längs der Rückstellachse weg vom ersten Zylinderelement, ein erster Anschlag des vierten Zylinderelements das dritte Zylinderelement über einen ersten Anschlag in Richtung des vierten Zylinderelements verlagert, während ein zweiter Anschlag ersten Zylinderelements das zweite Zylinderelement über dessen ersten Anschlag gegen das Rückstellelement abstützt, wobei das Rückstellelement während bzw. bei bzw. nach einer Verlagerung des ersten relativ zum vierten Zylinderelement längs der Rückstellachse eine Rückstellkraft zwischen dem zweiten und dem dritten Zylinderelement etabliert. Der gemeinsamen erfinderischen Idee einer kompakten Bauweise folgend, ist es besonders bevorzugt, dass der Rückstellteil ineinander verschachtelte Zylinderelemente aufweist welche sich besonders platzsparend bei ausreichend großen Federwegen ineinander schieben lassen. Der Rückstellteil leistet auf diese Weise, neben beispielsweise der bevorzugten Integration des Dämpfteils und des Aktivteils in die Betätigungseinheit, einen wesentlichen Beitrag zur kompakten Bauweise der Lenkanordnung insgesamt. Der Rückstellteil übernimmt erfindungsgemäß eine Rückstellung der Lenkanordnung in die Geradeausfahrtstellung, bzw. Neutralstellung. Zu diesem Zweck ist ein Rückstellelement vorgesehen, welches bei einer Auslenkung der Lenkanordnung aus dieser Neutralstellung im Rückstellteil auf Druck beansprucht wird, wobei eine Rückstellkraft wirkt, die die Lenkanordnung wieder in die Neutralstellung zu verlagern strebt. Bevorzugt ist das erste Zylinderelement relativ zum Fahrwerk des Nutzfahrzeuges, bzw. zum starren Teil einer Lenkachse unverlagerbar, mittelbar oder unmittelbar angeordnet, während das vierte Zylinderelement unverlagerbar relativ zu den bewegten Teilen der Lenkanordnung angeordnet ist. Ein Lenkausschlag der Lenkanordnung führt erfindungsgemäß zu einem Zusammendrücken oder einem Auseinanderziehen des Rückstellteils, wobei das erste und das vierte Zylinderelement eine Relativbewegung zueinander ausführen. Kennzeichnend für den erfindungsgemäßen Rückstellteil, ist seine kompakte Bauweise und die Fähigkeit, das Rückstellelement sowohl bei einem Zusammendrücken als auch bei einem Auseinanderziehen des Rückstellteils jeweils nur auf Druck zu beanspruchen. Auf diese Weise kann die Lebensdauer, bzw. die Anzahl der möglichen Lastzyklen, des Rückstellelements, beispielsweise eine Spiralfeder, signifikant gesteigert werden. Die kompakte Bauweise ergibt sich aus der erfindungsgemäßen Anordnung der vier Zylinderelemente und der jeweils an diesen vorgesehenen Anschlägen. Die Anschläge sind bevorzugt nach innen oder nach außen ragende Kragen ausgebildet und dienen entweder dem Abstützen des Rückstellelements oder der Abstützung eines korrespondierenden Anschlages eines, in einer Richtung abzustützenden bzw. mitzuführenden Zylinderelements. Das Rückstellelement ist bevorzugt zwischen dem zweiten und dem dritten Zylinderelement, auch während sich die Lenkanordnung in Neutralstellung befindet, vorgespannt.

Mit Vorteil füllt das Rückstellelement die von dem zweiten Zylinderelement und dem dritten Zylinderelement eingenommene Erstreckung, bzw. Baulänge entlang, bzw. parallel der Rückstellachse im Wesentlichen vollständig aus. Die durch das zweite und das dritte Zylinderelement definierte Baulänge entspricht dabei vorzugsweise der Summe der Gesamterstreckung beider Zylinderelemente abzüglich der Länge, entlang derer sich das zweite und das dritte Zylinderelement überlappen, und abzüglich der Erstreckung des zweiten Anschlages des zweiten Zylinderelements und der Erstreckung des ersten Anschlages des dritten Zylinderelements längs der Rückstellachse. "Im Wesentlichen" meint in diesem Zusammenhang also, dass von der gesamten Erstreckung, bzw. Baulänge, welche durch das zweite und das dritte Zylinderelement zusammen eingenommen wird, lediglich die Erstreckung der beiden äußeren Anschläge abgezogen wird um zur bevorzugten Erstreckung des Rückstellelements zu gelangen. Durch diese bevorzugte Ausbildung des Rückstellteiles, kann eine besonders gute Raumausnutzung durch das Rückstellelement erfolgen und es stehen bei einer kompakten Bauweise des Rückstellteiles und damit der Lenkanordnung besonders große Federwege zur Verfügung.

Vorzugsweise gelangt der erste Kragen des dritten Zylinders am ersten Anschlag des ersten Zylinderelements zur Anlage, während das Rückstellteil zusammengepresst wird. Für das Erreichen einer kompakten und damit gewichtssparenden Bauweise des Rückstellteils, ist es bevorzugt den ersten Anschlag des dritten Zylinderelements möglichst weit entfernt vom zweiten Anschlag des vierten Zylinderelements anzuordnen und auf diese Weise die Erstreckung, bzw. die zur Verfügung stehende Länge, des Rückstellteils längs der Rückstellachse, im Wesentlichen vollständig mit dem Rückstellelement auszunutzen. Bei einer vergleichsweise kleinen Gesamtlänge des Rückstellteils ergibt sich auf diese Weise ein möglichst großer, maximal möglicher Federweg des Rückstellelements. Erfindungsgemäß ist das Verhältnis des maximalen Federwegs, d.h. des Weges um den das Federelement maximal zusammenpressbar ist, zur Gesamtlänge des Rückstellteils in Neutralstellung 0,3 bis 0,8, bevorzugt 0,4 bis 0,7 und besonders bevorzugt ca. 0,5 bis 0,6. Die Gesamtlänge des Rückstellteils ist dabei bevorzugt der Abstand des ersten Anschlags des ersten Zylinderelements vom zweiten Anschlag des vierten Zylinderelements in Neutralstellung. Es versteht sich, dass das beschriebene Verhältnis von der Geometrie des Rückstellelements, insbesondere vom Verhältnis der Drahtdicke einer bevorzugt verwendeten Spiralfeder zum Abstand der Windungen voneinander längs der Rückstellachse, abhängig ist.

Bevorzugt weist der Rückstellteil eine Stützeinheit umfassend ein erstes Stützelement und ein zweites Stützelement auf, wobei das erste Stützelement am ersten Zylinderelement und das zweite Stützelement am vierten Zylinderelement festgelegt ist, wobei eines der Stützelemente eine Aussparung aufweist, in welche das jeweils andere Stützelement längs der Rückstellachse zumindest abschnittsweise einführbar ist, so dass ein Verschwenken des ersten Zylinderelements relativ zum vierten Zylinderelement längs der Rückstellachse verhindert ist. Die Stützeinheit schützt den Rückstellteil bevorzugt gegen Einknicken bei Druckbelastung entlang der Rückstellachse. Bevorzugt greift das erste Stützelement teleskopartig in das zweite Stützelement ein, so dass quer zur Rückstellachse ein Formschluss zwischen beiden Stützelementen gebildet ist, der eine Verlagerung quer zur Rückstellachse des ersten relativ zum zweiten Stützelement im Wesentlichen verhindert. "Im Wesentlichen" bedeutet in diesem Zusammenhang, dass kleinere Verlagerungen im Rahmen des fertigungsbedingten Spaltmaßes auch quer zur Rückstellachse stattfinden können.

Erfindungsgemäß ist ein Lenksystem vorgesehen, welches die Merkmal der zuvor beschriebenen Lenkanordnung und dem weiterhin erfindungsgemäßen Rückstellteil vereint. Dieses Lenksystem weist eine bevorzugte, kompakte Bauweise auf, da die kompakte Anordnung der Komponenten der Betätigungseinheit mit einem kompakten Rückstellteil kombiniert werden können.

Weitere Vorteile und Merkmale der vorliegenden Erfindung ergeben sich aus der nachfolgenden Beschreibung mit Bezug auf die beigefügten Figuren. Einzelne Merkmale der dargestellten, bevorzugten Ausführungsformen können dabei im Rahmen der Erfindung miteinander kombiniert werden. Es zeigen:
- Fig. 1: Eine Ansicht einer bevorzugten Ausführungsform der erfindungsgemäßen Lenkanordnung in Neutralstellung,
- Fig. 2: Eine bevorzugte Ausführungsform der erfindungsgemäßen Lenkanordnung mit Gelenken,
- Fig.3: Eine bevorzugte Ausführungsform der Betätigungseinheit mit eingeschobener Spurstangeneinheit,
- Fig. 4: Eine Ansicht einer bevorzugten Ausführungsform der erfindungsgemäßen Lenkanordnung in Neutralstellung, und
- Fig. 5: Eine Schnittansicht einer bevorzugten Ausführungsform des erfindungsgemäßen Rückstellteils.

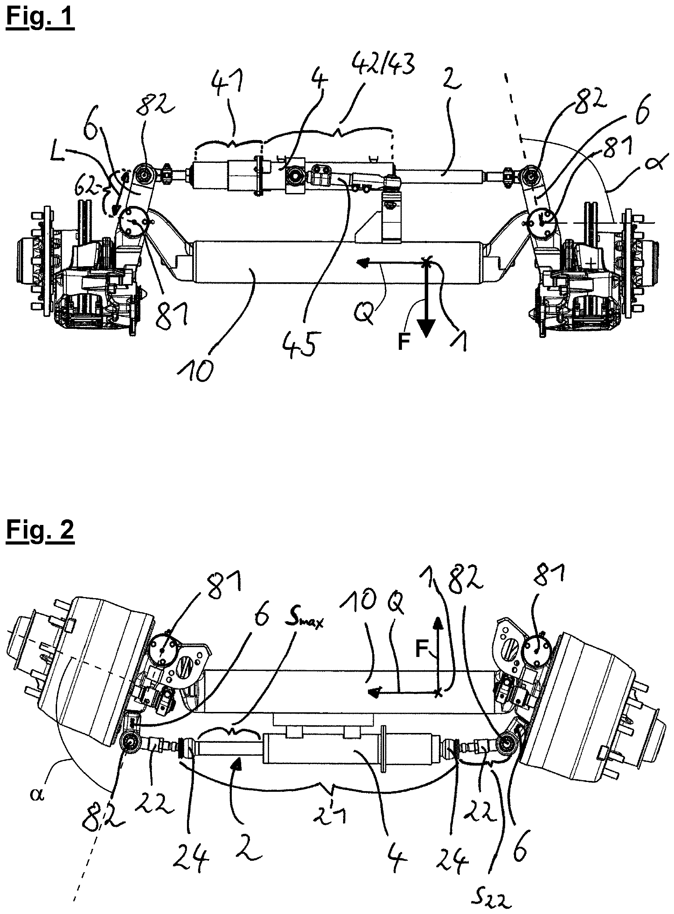

Fig. 1 zeigt eine bevorzugte Ausführungsform der erfindungsgemäßen Lenkanordnung, wobei eine Betätigungseinheit 4 über ein Festlegungselement 45 mittelbar an der starren Achse 10 eines Nutzfahrzeuges festgelegt ist. Das Festlegungselement 45 sichert die Betätigungseinheit 4 dabei insbesondere gegen Verlagerung relativ zu einem Bezugssystem 1 längs einer Querachse Q. Die Betätigungseinheit 4 weist einen Rückstellteil 41, einen Aktivteil 42 und einen Dämpfteil 43 auf, wobei in der dargestellten bevorzugten Ausführungsform der Aktivteil 42 und der Dämpfteil 43 integral miteinander ausgeführt sind. Alternativ bevorzugt kann der Dämpfteil 43 räumlich und funktional getrennt vom Aktivteil 42 ausgelegt sein. Durch die Betätigungseinheit 4 hindurch ragt bevorzugt eine Spurstangeneinheit 2, wobei die Spurstangeneinheit 2 bevorzugt durch die Betätigungseinheit 4 geführt ist. An ihren distalen Enden greift die Spurstangeneinheit 2 bevorzugt unmittelbar oder mittelbar in einen zweiten Drehpunkt 82 ein und ist in diesem jeweils drehbar an einem Hebelelement 6 festgelegt. In den zweiten Drehpunkten 82 sind insbesondere bevorzugt Kugellager oder Hülsen vorgesehen, die eine leichte Drehbewegung der Spurstangeneinheit 2 relativ zum Hebelelement 6 ermöglichen. Das Hebelelement 6 wiederum ist drehbar bzw. schwenkbar in einem ersten Drehpunkt 81 unverlagerbar zum Bezugssystem 1 an der starren Achse 10 festgelegt. Das Hebelelement 6 weist bevorzugt einen Hebelarm 62 und weitere Vorrichtungen, vorzugsweise zur drehbaren Lagerung eines Rades bzw. einer Radaufhängung eines Nutzfahrzeuges auf. Die in der Figur dargestellte Lenkeranordnung und insbesondere die Ausbildung des Hebelelements ist in der Art einer aus dem Stand der Technik bekannten Vorlaufachse ausgeführt, wobei die Drehachse des am Hebelements 6 anzuordnenden Rades vor dem ersten Drehpunkt 81 angeordnet ist. Weiterhin ist die in der Figur dargstellte Ausführungsform der erfindungsgemäßen Lenkanordnung in der Neutralstellung dargestellt, welche insbesondere bevorzugt dadurch gekennzeichnet ist, dass die Drehachsen der an dem Hebelelement 6 bevorzugt angelagerten Radaufhängung parallel oder kollinear zur Querrichtung Q des Bezugssystems 1 ausgerichtet sind. Mit anderen Worten ist der Lenkausschlag der Lenkanordnung in der Neutralstellung gleich Null. Insbesondere bevorzugt, zur Einstellung eines bestimmten Spurdifferenzwinkels, ist die längs des Hebelarms 62 des Hebelelements 6 verlaufende Gerade um einen Winkel α, bezogen auf die Querrichtung Q, verschwenkt. Als Spurdifferenzwinkel wird in diesem Zusammenhang ein größerer Lenkeinschlag des bei der Kurvenfahrt, bezogen auf die befahrene Kurve innen liegenden Hebelelements 6 im Vergleich zum außen liegenden Hebelelement 6, verstanden. Bei der in der Figur gezeigten Ausführungsform schlägt bei Befahren einer Linkskurve entsprechend die in der Figur rechts gezeigte Radaufhängung stärker ein als die linke. Die beiden ersten Drehpunkte 81 und die beiden zweiten Drehpunkte 82 spannen bevorzugt kein Rechteck auf, sondern ein Trapez, üblicherweise auch Lenktrapez genannt. Je größer dabei der Winkel α ist, desto größer kann bevorzugt auch der Spurdifferenzwinkel eingestellt werden. Der Hebelarm 62 des Hebelelements 6 weist bevorzugt eine Länge L auf, die in einem bevorzugten Verhältnis zum maximal möglichen Verlagerungsweg sₘₐₓ der Spurstangeneinheit 2 von 0,7 - 1,3, bevorzugt von 0,85 - 1,1 und insbesondere bevorzugt von 0,9 - 1 steht. Weiterhin kann die erfindungsgemäße Lenkanordnung, je nach zur Verfügung stehendem Bauraum am Nutzfahrzeug, in Geradeausfahrtrichtung F gesehen, hinter der starren Achse 10 angeordnet sein.

Fig. 2 zeigt eine bevorzugte Ausführungsform der erfindungsgemäßen Lenkanordnung, wobei die Spurstangeneinheit 2 besonders bevorzugt zwei Gelenke 24 aufweist, welche einen ersten Spurstangenabschnitt 21 mit jeweils einem zweiten Spurstangenabschnitt 22 schwenkbar verbinden, wobei eine Verlagerung der Spurstangeneinheit 2 längs der Querrichtung Q ohne Verschwenkung oder Verlagerung des ersten Spurstangenabschnitts 21 senkrecht, bzw. quer zur Querrichtung Q möglich ist. Bevorzugterweise kann die Betätigungseinheit 4, welche den ersten Spurstangenabschnit 21 führt, bei dieser Ausführungsform fest und unverlagerbar an der starren Achse 10 angeordnet werden. Bevorzugt wird dabei eine aufwendige Festlegung der Betätigungseinheit 4 mittels eines Festlegungselements 45, wie in Figur 1 gezeigt, vermieden und es kann eine robustere Bauweise der Lenkanordnung gewählt werden. Die zweiten Spurstangenabschnitte 22 weisen dabei eine bevorzugte Erstreckung s₂₂ auf, welche in einem Verhältnis zum maximalen Verlagerungsweg sₘₐₓ der Spurstangeneinheit 2, bzw. des ersten Spurstangenabschnitts 21, von bevorzugt 0,3 - 1,5, besonders bevorzugt 0,5 - 1 und insbesondere bevorzugt von 0,7 - 0,8 stehen. Die Erstreckung s₂₂ der zweiten Spurstangenabschnitte 22 wird dabei insbesondere vom Drehpunkt des Gelenks 24 bis zum zweiten Drehpunkt 82 gemessen. Der Winkel α ist, da die Lenkanordnung sich nicht in Neutralstellung befindet, nicht von einer Parallelen der Querachse Q, sondern von der Rotationsachse von an der Lenkanordnung bevorzugt gelagerter Räder (nicht gezeigt) bis zur Geraden, welche längs des Hebelarmes 6 verläuft, gemessen. Bei der in Fig. 2 gezeigten Ausführungsform ist der Winkel α bevorzugt nur wenig größer als 90°.

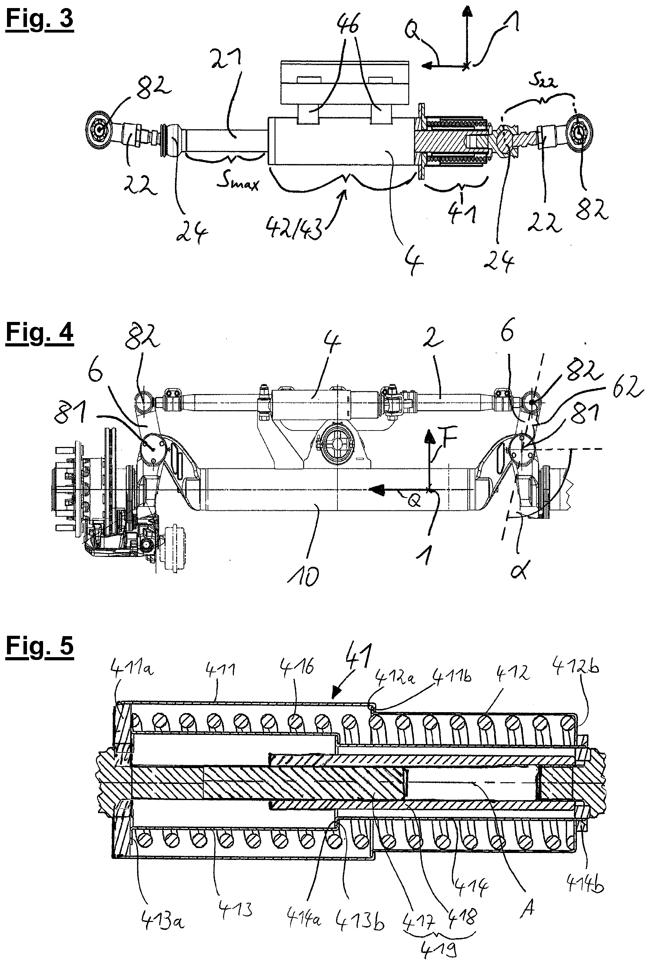

Fig. 3 zeigt eine Detailansicht der bereits in Fig. 2 gezeigten Spurstangeneinheit 2 mit einem ersten Spurstangenabschnitt 21, zwei Gelenken 24 und zwei zweiten Spurstangenabschnitten 22. Die Betätigungseinheit 4 kann bei dieser Ausführungsform unverlagerbar an einer nicht dargestellten starren Achse 10 festgelegt werden, wobei die beiden Festlegungsabschnitte 46 gleichzeitig die Zu- und Abfuhrkanäle für Arbeitsfluid in den Aktivteil 42 bzw. den Dämpfteil 43 der Betätigungseinheit 4 enthalten können. Wie in der Figur dargestellt ist im Rückstellteil 41 ein Rückstellelement vorgesehen, wobei dieses in der dargestellten Stellung der Spurstangeneinheit maximal zusammengepresst ist. In der Figur ist die Rückstelleinheit 2 also maximal nach links relativ zur Betätigungseinheit 4 bzw. relativ zum Bezugssystem 1 längs der Querachse Q ausgelenkt.

Fig. 4 zeigt eine bevorzugte Ausführungsform der erfindungsgemäßen Lenkanordnung, welche als Nachlauflenkachse ausgebildet ist, in Neutralstellung. Die ersten Drehpunkte 81 der Lenkanordnung sind, in Geradeausfahrtrichtung F des Nutzfahrzeuges, bevorzugt vor den Radlagern der nicht gezeigten Räder angeordnet, in der Figur also oberhalb dieser Radlager, durch welche in der gezeigten Stellung die Querachse Q verläuft. Weiterhin sind die zweiten Drehpunkte 82 in Geradeausfahrtrichtung F des Nutzfahrzeuges vor den ersten Drehpunkten 81, in der Figur entsprechend oberhalb der ersten Drehpunkte 81 angeordnet. Die zuvor beschriebene Definition des Winkels α, in Neutralstellung von einer Parallelen zur Querachse Q nach außen in Richtung der (nicht gezeigten) Räder des Nutzfahrzeug weisend, entgegen der Geradeausfahrtrichtung F bis zur Geraden, welche längs des Hebelarmes 6 verläuft, ergibt für die vorliegende Ausführungsform, dass die Hebelarme 6 ein offenes V beschreiben. Die längere der Parallelen des Lenktrapezes wird entsprechend durch die zweiten Drehpunkte 82 begrenzt.

Es versteht sich, dass die gemessenen Winkel zwischen den Projektionen der räumlich angeordneten Geraden und Punkte auf der Betrachterebene der jeweiligen Figur definiert sind.

Fig. 5 zeigt eine Schnittansicht einer bevorzugten Ausführungsform des erfindungsgemäßen Rückstellteils 41. Der Rückstellteil umfasst vier Zylinderelemente 411, 412, 413 und 414, welche bevorzugt hohlkörperförmig, bzw. hülsenförmig ausgelegt sind und bevorzugt von den jeweils anderen Zylinderelementen verschiedene Innen- und Außendurchmesser aufweisen. Bevorzugt ist das zweite Zylinderelement 412 zumindest bereichsweise in das erste Zylinderelement 411 und das vierte Zylinderelement 414 zumindest bereichsweise in das dritte Zylinderelement 413 einschiebbar. Weiterhin bevorzugt sind das dritte und das vierte Zylinderelement 413, 414 zumindest bereichsweise im von dem ersten und dem zweiten Zylinderelement 411, 412 aufgespannten Hohlraum angeordnet. Das erste Zylinderelement 411 weist einen ersten Anschlag 411a auf, der bevorzugt als Boden, bzw. Abschlussplatte ausgebildet ist. Der erste Anschlag 411a des ersten Zylinderelements 411 ist dabei mit seiner nach außen weisenden Fläche mit weiteren Teilen der Betätigungseinheit 4 (nicht gezeigt), oder mit starren Bereichen des Nutzfahrzeugs verbunden. Weiterhin ist am ersten Anschlag 411a des ersten Zylinderelement 411 bevorzugt das erste Stützelement 417 der Stützeinheit 419 festgelegt, beispielsweise durch eine Schraubverbindung (gezeigt) oder durch Verschweißen. Das zweite Zylinderelement 412 weist einen zweiten Anschlag 412b auf, der bevorzugt als Deckel mit Aussparung ausgebildet ist, wobei durch die Aussparung hindurch, das vierte Zylinderelement 414 ragt und relativ zum zweiten Zylinderelement 412 gleiten kann. Bei einem Zusammendrücken des Rückstellteils 41 stützt sich der zweite Anschlag 412b des zweiten Zylinderelements 412 an einem zweiten Anschlag 414b des vierten Zylinderelements 414 ab, so dass das in der Figur rechts gezeigte Ende des Rückstellelements 416 nach links verlagert wird. Das links liegende Ende des Rückstellelements 416 stützt dabei am ersten Anschlag 413a des dritten Zylinderelements 413 ab, welcher sich bevorzugt am ersten Anschlag 411a des ersten Zylinderelements 411 abstützt. Das Zusammendrücken des Rückstellelements 416 lässt dieses eine Rückstellkraft zwischen dem zweiten Anschlag 412b des zweiten Zylinderelements 412 und dem ersten Anschlag 413a des dritten Zylinderelements 413, und somit mittelbar zwischen dem vierten und dem ersten Zylinderelement 414, 411, etablieren. Bei einem Auseinanderziehen des Rückstellteils 41, bzw. bei Vergrößern des Abstandes des vierten Zylinderelements 414 vom ersten Zylinderelement 411, gleitet das vierte Zylinderelement 414 in der Aussparung im zweiten Anschlag 412b des zweiten Zylinderelements 412 nach rechts. Während der erste Anschlag 414a des vierten Zylinderelements 414 den zweiten Anschlag 413b des dritten Zylinderelements 413 abstützt und so das dritte Zylinderelement 413 nach rechts zieht, wird das zweite Zylinderelement 412 über seinen ersten Anschlag 412a, welcher am zweiten Anschlag 411b des ersten Zylinderelement 411 eingreift, gegen Verlagerung nach in der Figur rechts, relativ zum ersten Zylinderelement 411 gesichert. Durch die Verlagerung des dritten Zylinderelements 413 entlang der Rückstellachse A relativ zum zweiten Zylinderelement 412, wird das Rückstellelement 416 zwischen dem ersten Anschlag 413a des dritten Zylinderelements 413 und dem zweiten Anschlag 412b des zweiten Zylinderelements 412 zusammengedrückt und es übt eine Rückstellkraft auf die beiden Anschlage 413a und 412b aus, welche den Rückstellteil 41 in seine Neutralstellung streben lässt, bei welcher das Rückstellelement 416 seine größte Erstreckung längs der Rückstellachse A aufweist. Es versteht sich, dass der in Fig. 5 gezeigte Rückstellteil 41 beispielsweise in der, in Fig. 3 gezeigten Ausführungsform der Betätigungseinheit 4 einsetzbar ist, wobei entweder der erste Anschlag 411a des ersten Zylinderelements 411 oder der zweite Anschlag 414b des vierten Zylinderelements 414 an der Spurstangeneinheit festgelegt ist und der jeweils andere Anschlag mit dem Gehäuse der Betätigungseinheit 4 verbunden ist. Auch die in den Figuren 1 und 2 gezeigten Ausführungsformen der erfindungsgemäßen Lenkanordnung können durch den Einbau des in Fig. 5 gezeigten Rückstellteils 41 um eine kompakte Bauweise bereichert werden.

**Bezugszeichenliste**

| | | | |
|---|---|---|---|
| 1 | Bezugssystem | 412a | erster Anschlag |
| 2 | Spurstangeneinheit | 412b | zweiter Anschlag |
| 4 | Betätigungseinheit | 413 | drittes Zylinderelement |
| 6 | Hebelelement | 413a | erster Anschlag |
| 10 | starre Achse | 413b | zweiter Anschlag |
| 21 | erster Spurstangenabschnitt | 414 | viertes Zylinderelement |
| 22 | zweiter Spurstangenabschnitt | 414a | erster Anschlag |
| 24 | Gelenk | 414b | zweiter Anschlag |
| 41 | Rückstellteil | 416 | Rückstellelement |
| 42 | Aktivteil | 417 | erstes Stützelement |
| 43 | Dämpfteil | 418 | zweites Stützelement |
| 45 | Festlegungselement | 419 | Stützeinheit |
| 46 | Festlegungsabschnitt | A | Rückstellachse |
| 62 | Hebelarm | α | Winkel |
| 81 | erster Drehpunkt | F | Geradeausfahrtrichtung |
| 82 | zweiter Drehpunkt | L | Länge |
| 411 | erstes Zylinderelement | Q | Querachse |
| 411a | erster Anschlag | Sₘₐₓ | maximaler Verlagerungsweg |
| 411b | zweiter Anschlag | S22 | Erstreckung der zweiten |
| 412 | zweites Zylinderelement | | Spurstangenabschnitte |

## Patentansprüche

1. Lenkanordnung, insbesondere für Nutzfahrzeuge und deren Anhänger, umfassend eine Spurstangeneinheit (2), eine Betätigungseinheit (4) und ein Hebelelement (6),
wobei das Hebelelement (6) schwenkbar an einem, in einem Bezugssystem (1) unverlagerbar angeordneten ersten Drehpunkt (81) festgelegt ist,
wobei die Betätigungseinheit (4) einen Rückstellteil (41) und einen Aktivteil (42) aufweist, **dadurch gekennzeichnet, dass** die Betätigungseinheit (9) einen Dämpfteil (43) aufweist und gegen Verlagerung längs einer Querachse (Q) relativ zum Bezugssystem (1) gesichert ist,
wobei zumindest einer der Teile (41, 42, 43) eine Kraft auf die Spurstangeneinheit (2) ausübt, um die Spurstangeneinheit (2) längs der Querachse (Q) zu verlagern oder gegen Verlagerung längs der Querachse (Q) zu sichern,
wobei die Spurstangeneinheit (2) in einem zweiten Drehpunkt (82) am Hebelelement (6) schwenkbar festgelegt ist, so dass eine Verlagerung der Spurstangeneinheit (2) längs der Querachse (Q) zu einer Schwenkbewegung des Hebelelements (6) um den ersten Drehpunkt (6) führt,
wobei der Dämpfteil (43) eine Dämpfkraft auf die Spurstangeneinheit (2) überträgt.

2. Lenkanordnung nach Anspruch 1,
wobei die Spurstangeneinheit (2) durch die Betätigungseinheit (4) hindurchreicht und an ihren distalen Enden jeweils in einem zweiten Drehpunkt (82) an je einem Hebelelement (6) festgelegt ist.

3. Lenkanordnung nach einem der vorhergehenden Ansprüche,
wobei die Betätigungseinheit (4) schwenkbar relativ zum Bezugssystem (1) gelagert ist, so dass Verlagerungskomponenten des zweiten Drehpunkts (82) senkrecht zur Querrichtung (Q) durch eine Verschwenkung der Betätigungseinheit (4) kompensiert werden.

4. Lenkanordnung nach einem der vorhergehenden Ansprüche,
wobei die Betätigungseinheit (4) ein Festlegungselement (45) aufweist, welches die Betätigungseinheit (4) senkrecht zur Querrichtung (Q) verlagerbar relativ zum Bezugssystem (1) festlegt.

5. Lenkanordnung nach einem der Ansprüche 1 oder 2,
wobei die Spurstangeneinheit (2) ein Gelenk (24) aufweist, welches einen ersten Spurstangenabschnitt (21) und einen zweiten Spurstangenabschnitt (22) schwenkbar aneinander festlegt,
wobei der erste Spurstangenabschnitt (21) bevorzugt in der Betätigungseinheit (4) geführt und gegen Verlagerung quer oder senkrecht zur Querrichtung (Q) gesichert ist, und
wobei die Betätigungseinheit (4) unverlagerbar und gegen Verschwenken gesichert relativ zum Bezugssystem (1) festgelegt ist.

6. Lenkanordnung nach einem der vorhergehenden Ansprüche,
wobei das Hebelelement (6) einen, sich zwischen dem ersten und dem zweiten Drehpunkt (81, 82) erstreckenden Hebelarm (62) aufweist,
wobei eine längs des Hebelarms (62) verlaufende Gerade bei Vorliegen einer Neutralstellung des Hebelelements (6) mit einem Winkel (α) verschwenkt zur Querrichtung (Q) des Bezugssystems (1) ausgerichtet ist, und
wobei der Winkel (α) bevorzugt größer als 90° ist.

7. Lenkanordnung nach einem der vorhergehenden Ansprüche,
wobei der erste Drehpunkt (81) vom zweiten Drehpunkt (82) mit einer Hebellänge (L) beabstandet ist,
wobei die Spurstangeneinheit (2) innerhalb eines maximalen Verlagerungswegs (sₘₐₓ) längs der Querachse (Q) verlagerbar ist, und
wobei das Verhältnis der Hebellänge (L) zum maximalen Verlagerungsweg (sₘₐₓ) im Bereich von 0,7 bis 1,3, bevorzugt 0,85 bis 1,1 und besonders bevorzugt bei ca. 0,9 bis 1 liegt.

8. Lenkanordnung nach einem der vorhergehenden Ansprüche,
wobei der Aktivteil (42) der Betätigungseinheit (4) eine Ventilanordnung aufweist, über die ein Arbeitsfluid zu- und abgeführt werden kann, um über ein Kolbenelement (26) eine Lenkkraft auf die Spurstangeneinheit (2) zu übertragen, wobei bei geschlossener Ventilanordnung die Spurstangeneinheit (2) gegen Verlagerung längs der Querachse (Q) gesichert ist.

9. Lenkanordnung nach Anspruch 8,
wobei der Dämpfteil (43) in den Aktivteil (42) integriert ist und bevorzugt eine Dämpfventilanordnung umfasst,
die Dämpfventilanordnung und/oder die Ventilanordnung des Aktivteils zur Dämpfung der Verlagerung der Spurstangeneinheit (2) beitragen.

10. Lenkanordnung nach einem der vorhergehenden Ansprüche,
wobei der Rückstellteil (41) räumlich und funktional vom Aktivteil (42) und/oder vom Dämpfteil (43) der Betätigungseinheit (4) getrennt ist.

11. Rückstellteil (41), umfassend
ein erstes Zylinderelement (411), ein zweites Zylinderelement (412), ein drittes Zylinderelement (413), ein viertes Zylinderelement (414) und ein Rückstellelement (416),
wobei zumindest die Zylinderelemente (411, 412, 413) hohlzylinderförmig ausgebildet sind,
wobei das dritte und das vierte Zylinderelement (413, 414) und das Rückstellelement (416) im Wesentlichen innerhalb des ersten und des zweiten Zylinderelements (411, 412) angeordnet und längs einer Rückstellachse (A) relativ zum ersten und zweiten Zylinderelement (411, 412) verlagerbar sind, wobei das zweite Zylinderelement (412) entlang der Rückstellachse (A) in das erste Zylinderelement (411) verlagerbar ist und das vierte Zylinderelement (414) längs der Rückstellachse (A) in das dritte Zylinderelement (413) verlagerbar ist, wobei sich das Rückstellelement (416) mit seinem ersten Ende an einem ersten Anschlag (413a) des dritten Zylinderelements (413) und mit seinem gegenüberliegenden, zweiten Ende an einem zweiten Anschlag (412b) des zweiten Zylinderelements (412) abstützt,
wobei während bzw. bei oder nach Verlagerung des vierten Zylinderelements (414) längs der Rückstellachse in Richtung des ersten Zylinderelements (411) ein zweiter Anschlag (414b) des vierten Zylinderelements (414) den zweiten Anschlag (412b) des zweiten Zylinderelements (412) gegen das Rückstellelement (416) stützt und sich das dritte Zylinderelement (413) an einem ersten Anschlag (411a) des ersten Zylinderelements (411) abstützt,
wobei während bzw. bei oder nach Verlagerung des vierten Zylinderelements (414) längs der Rückstellachse weg vom ersten Zylinderelement (411), ein erster Anschlag (414a) des vierten Zylinderelements (414) das dritte Zylinderelement (413) über einen ersten Anschlag (413a) in Richtung des vierten Zylinderelements verlagert, während ein zweiter Anschlag (411b) ersten Zylinderelements (411) das zweite Zylinderelement (412) über dessen ersten Anschlag (412a) gegen das Rückstellelement (416) abstützt,
wobei das Rückstellelement (416) während bzw. bei oder nach einer Verlagerung des ersten relativ zum vierten Zylinderelement (411, 414) längs der Rückstellachse (A) eine Rückstellkraft zwischen dem zweiten und dem dritten Zylinderelement (412, 413) etabliert,
**dadurch gekennzeichnet, dass** das Verhältnis des maximalen Federwegs des Rückstellelements (416) zur Gesamtlänge des Rückstellteils (41) in Neutralstellung 0,3 bis 0,8 beträgt.

12. Rückstellteil (41) nach Anspruch 11,
wobei das Rückstellelement (416) die von dem zweiten Zylinderelement (412) und dem dritten Zylinderelement (413) eingenommene Erstreckung entlang der Rückstellachse (A) im Wesentlichen vollständig ausfüllt.

13. Rückstellteil (41) nach Anspruch 11 oder 12,
wobei der erste Kragen (413a) des dritten Zylinders (413) am ersten Anschlag (411a) des ersten Zylinderelements (411) zur Anlage gelangt, während das Rückstellteil (41) zusammengepresst wird.

14. Rückstellteil (41) nach einem der Ansprüche 11 bis 13,
wobei eine Stützeinheit (419) umfassend ein erstes Stützelement (417) und ein zweites Stützelement (418) vorgesehen ist,
wobei das erste Stützelement (417) am ersten Zylinderelement (411) und das zweite Stützelement (418) am vierten Zylinderelement (414) festgelegt ist, wobei eines der Stützelemente (417, 418) eine Aussparung aufweist, in welche das jeweils andere Stützelement (418, 417) längs der Rückstellachse (A) zumindest abschnittsweise einführbar ist, so dass ein Verschwenken des ersten Zylinderelements (411) relativ zum vierten Zylinderelement (414) längs der Rückstellachse (A) verhindert ist.

15. Lenksystem, umfassend eine Lenkanordnung nach einem der Ansprüche 1 bis 10 und darin einen Rückstellteil (41) nach einem der Ansprüche 11 bis 14.

## Claims

1. Steering arrangement, in particular for commercial vehicles and their trailers, comprising a track rod unit (2), an actuating unit (4) and a lever element (6), the lever element (6) being fixed pivotably on a first pivot point (81) which is arranged immovably in a reference system (1), the actuating unit (4) having a restoring part (41) and an active part (42), **characterized in that** the actuating unit (9) has a damping part (43) and is secured against movement along a transverse axis (Q) relative to the reference system (1), at least one of the parts (41, 42, 43) exerting a force on the track rod unit (2), in order to move the track rod unit (2) along the transverse axis (Q) or to secure it against movement along the transverse axis (Q), the track rod unit (2) being fixed pivotably at a second pivot point (82) on the lever element (6), with the result that a movement of the track rod unit (2) along the transverse axis (Q) leads to a pivoting movement of the lever element (6) about the first pivot point (6), the damping part (43) transmitting a damping force to the track rod unit (2).

2. Steering arrangement according to Claim 1, the track rod unit (2) reaching through the actuating unit (4) and being fixed at its distal ends in each case on a second pivot point (82) on in each case one lever element (6).

3. Steering arrangement according to either of the preceding claims, the actuating unit (4) being mounted such that it can be pivoted relative to the reference system (1), with the result that movement components of the second pivot point (82) perpendicularly with respect to the transverse direction (Q) are compensated for by way of pivoting of the actuating unit (4).

4. Steering arrangement according to one of the preceding claims, the actuating unit (4) having a fixing element (45) which fixes the actuating unit (4) such that it can be moved perpendicularly with respect to the transverse direction (Q) relative to the reference system (1).

5. Steering arrangement according to either of Claims 1 and 2, the track rod unit (2) having a joint (24) which fixes a first track rod section (21) and a second track rod section (22) on one another pivotably, the first track rod section (21) preferably being guided in the actuating unit (4) and being secured against movement transversely or perpendicularly with respect to the transverse direction (Q), and the actuating unit (4) being fixed immovably and such that it is secured against pivoting relative to the reference system (1).

6. Steering arrangement according to one of the preceding claims, the lever element (6) having a lever arm (62) which extends between the first and the second pivot point (81, 82), a straight line which runs along the lever arm (62) being oriented such that it is pivoted at an angle (α) with respect to the transverse direction (Q) of the reference system (1) if a neutral position of the lever element (6) is present, and the angle (α) preferably being greater than 90°.

7. Steering arrangement according to one of the preceding claims, the first pivot point (81) being spaced apart from the second pivot point (82) by a lever length (L), it being possible for the track rod unit (2) to be moved along the transverse axis (Q) within a maximum movement travel (sₘₐₓ), and the ratio of the lever length (L) to the maximum movement travel (sₘₐₓ) lying in the range from 0.7 to 1.3, preferably from 0.85 to 1.1 and particularly preferably at approximately from 0.9 to 1.

8. Steering arrangement according to one of the preceding claims, the active part (42) of the actuating unit (4) having a valve arrangement, via which an operating fluid can be fed in and discharged, in order to transmit a steering force via a piston element (26) to the track rod unit (2), the track rod unit (2) being secured against movement along the transverse axis (Q) in the case of a closed valve arrangement.

9. Steering arrangement according to Claim 8, the damping part (43) being integrated into the active part (42) and preferably comprising a damping valve arrangement, the damping valve arrangement and/or the valve arrangement of the active part contributing to damping of the movement of the track rod unit (2).

10. Steering arrangement according to one of the preceding claims, the restoring part (41) being separated spatially and functionally from the active part (42) and/or from the damping part (43) of the actuating unit (4).

11. Restoring part (41), comprising a first cylinder element (411), a second cylinder element (412), a third cylinder element (413), a fourth cylinder element (414) and a restoring element (416), at least the cylinder elements (411, 412, 413) being of hollow-cylindrical configuration, the third and the fourth cylinder element (413, 414) and the restoring element (416) being arranged substantially within the first and the second cylinder element (411, 412) and being capable of being moved along a restoring axis (A) relative to the first and second cylinder element (411, 412), it being possible for the second cylinder element (412) to be moved along the restoring axis (A) into the first cylinder element (411), and it being possible for the fourth cylinder element (414) to be moved along the restoring axis (A) into the third cylinder element (413), the restoring element (416) being supported by way of its first end on a first stop (413a) of the third cylinder element (413) and by way of its opposite, second end on a second stop (412b) of the second cylinder element (412), a second stop (414b) of the fourth cylinder element (414) supporting the second stop (412b) of the second cylinder element (412) against the restoring element (416) during or in the case of or after the movement of the fourth cylinder element (414) along the restoring axis in the direction of the first cylinder element (411), and the third cylinder element (413) being supported on a first stop (411a) of the first cylinder element (411), a first stop (414a) of the fourth cylinder element (414) moving the third cylinder element (413) via a first stop (413a) in the direction of the fourth cylinder element during or in the case of or after movement of the fourth cylinder element (414) along the restoring axis away from the first cylinder element (411), whereas a second stop (411b) of the first cylinder element (411) supports the second cylinder element (412) via its first stop (412a) against the restoring element (416), the restoring element (416) establishing a restoring force between the second and the third cylinder element (412, 413) during or in the case of or after a movement of the first cylinder element (411) relative to the fourth cylinder element (414) along the restoring axis (A), **characterized in that** the ratio of the maximum spring travel of the restoring element (416) to the overall length of the restoring part (41) in the neutral position is from 0.3 to 0.8.

12. Restoring part (41) according to Claim 11, the restoring element (416) substantially completely filling the extent along the restoring axis (A), which extent is occupied by the second cylinder element (412) and the third cylinder element (413).

13. Restoring part (41) according to Claim 11 or 12, the first collar (413a) of the third cylinder (413) coming into contact with the first stop (411a) of the first cylinder element (411), while the restoring element (41) is being pressed together.

14. Restoring part (41) according to one of Claims 11 to 13, a supporting unit (419) being provided comprising a first supporting element (417) and a second supporting element (418), the first supporting element (417) being fixed on the first cylinder element (411) and the second supporting element (418) being fixed on the fourth cylinder element (414), one of the supporting elements (417, 418) having a cut-out, into which the respectively other supporting element (418, 417) can be introduced at least in sections along the restoring axis (A), with the result that pivoting of the first cylinder element (411) relative to the fourth cylinder element (414) along the restoring axis (A) is prevented.

15. Steering system, comprising a steering arrangement according to one of Claims 1 to 10 and, therein, a restoring part (41) according to one of Claims 11 to 14.

## Revendications

1. Agencement de direction, en particulier pour véhicules utilitaires et leurs remorques, incluant une unité formant barre d'accouplement (2), une unité d'actionnement (4) et un élément à levier (6),
dans lequel l'élément à levier (6) est fixé avec possibilité de pivotement sur un premier centre de rotation (81) agencé de façon non déplaçable dans un système de référence (1),
dans lequel l'unité d'actionnement (4) comprend une partie de rappel (41) et une partie active (42),
**caractérisé en ce que**
l'unité d'actionnement (9) comprend une partie d'amortissement (43) et est bloquée à l'encontre d'un déplacement le long d'un axe transversal (Q) par rapport au système de référence (1),
dans lequel l'une au moins des parties (41, 42, 43) exerce une force sur l'unité formant barre d'accouplement (2), afin de déplacer l'unité formant barre d'accouplement (2) le long de l'axe transversal (Q) ou de la bloquer à l'encontre d'un déplacement le long de l'axe transversal (Q),
dans lequel l'unité formant barre d'accouplement (2) est immobilisée sur l'élément à levier (6) à un second centre de rotation (82) de manière à pouvoir pivoter, de sorte qu'un déplacement de l'unité formant barre d'accouplement (2) le long de l'axe transversal (Q) mène à un mouvement de pivotement de l'élément à levier (6) autour du premier centre de rotation (6),
dans lequel la partie d'amortissement (43) transmet une force d'amortissement à l'unité formant barre d'accouplement (2).

2. Agencement de direction selon la revendication 1,
dans lequel l'unité formant barre d'accouplement (2) passe à travers l'unité d'actionnement (4) et est immobilisée à ses extrémités distales, respectivement en un second centre de rotation (82), sur un élément à levier respectif (6).

3. Agencement de direction selon l'une des revendications précédentes, dans lequel l'unité d'actionnement (4) est montée avec possibilité de pivotement par rapport au système de référence (1), de sorte que des composantes de déplacement du second centre de rotation (82) perpendiculairement à la direction transversale (Q) sont compensées par un pivotement de l'unité d'actionnement (4).

4. Agencement de direction selon l'une des revendications précédentes,
dans lequel l'unité d'actionnement (4) comprend un élément d'immobilisation (45), qui immobilise l'unité d'actionnement (4) par rapport au système de référence (1) de façon déplaçable perpendiculairement à la direction transversale (Q).

5. Agencement de direction selon l'une des revendications 1 ou 2,
dans lequel l'unité formant barre d'accouplement (2) comprend une articulation (24) qui immobilise une première portion de barre d'accouplement (21) et une seconde portion de barre d'accouplement (22) l'une sur l'autre de manière à pouvoir pivoter,
dans lequel la première portion de barre accouplement (21) est guidée de préférence dans l'unité d'actionnement (4) et est bloquée à l'encontre d'un déplacement transversalement ou perpendiculairement à la direction transversale (Q), et
dans lequel l'unité d'actionnement (4) est immobilisée de manière non déplaçable et bloquée à l'encontre d'un pivotement par rapport au système de référence (1).

6. Agencement de direction selon l'une des revendications précédentes,
dans lequel l'élément à levier (6) comprend un bras de levier (62) qui s'étend entre le premier et le second centre de rotation (81, 82),
dans lequel une droite qui passe le long du bras de levier (62), en présence d'une position neutre de l'élément à levier (6), est orientée avec un angle (α) en pivotement par rapport à la direction transversale (Q) du système de référence (1), et
dans lequel l'angle (α) est de préférence plus grand que 90°.

7. Agencement de direction selon l'une des revendications précédentes,
dans lequel le premier centre de rotation (81) est éloigné du second centre de rotation (82) de la longueur (L) du levier,
dans lequel l'unité formant barre d'accouplement (2) est déplaçable le long de l'axe transversal (Q) à l'intérieur d'un trajet de déplacement maximum (Smax), et
dans lequel le rapport de la longueur (L) du levier sur le trajet de déplacement maximum (Smax) est situé dans la plage de 0,7 à 1,3, de préférence 0,85 à 1,1, et de façon particulièrement préférée environ 0,9 à 1.

8. Agencement de direction selon l'une des revendications précédentes,
dans lequel la partie active (42) de l'unité d'actionnement (4) comprend un agencement à soupape via lequel un fluide de travail peut être amené et évacuer, afin de transmettre, via un élément en piston (26), une force de direction sur l'unité formant barre d'accouplement (2),
dans lequel lorsque l'agencement à soupape est fermé, l'unité formant barre d'accouplement (2) est bloquée à l'encontre d'un déplacement le long de l'axe transversal (Q).

9. Agencement de direction selon la revendication 8,
dans lequel la partie d'amortissement (43) est intégrée dans la partie active (42) et inclut de préférence un agencement de soupape d'amortissement, l'agencement de soupape d'amortissement et/ou l'agencement de soupape de la partie active contribuent à l'amortissement du déplacement de l'unité formant barre d'accouplement (2).

10. Agencement de direction selon l'une des revendications précédentes,
dans lequel la partie de rappel (41) est séparée sur le plan spatial et fonctionnel de la partie active (42) et/ou de la partie d'amortissement (43) de l'unité d'actionnement (4).

11. Partie de rappel (41) comprenant :
un premier élément cylindrique (411), un second élément cylindrique (412),
un troisième élément cylindrique (413), un quatrième élément cylindrique (414) et un élément de rappel (416),
dans laquelle au moins les éléments cylindriques (411, 412, 413) sont réalisés en forme de cylindres creux,
dans laquelle le troisième et le quatrième élément cylindrique (413, 414) et l'élément de rappel (416) sont agencés sensiblement à l'intérieur du premier et du second élément cylindrique (411, 412) et sont déplaçables le long d'un axe de rappel (A) par rapport au premier et au second élément cylindrique (411, 412),
dans laquelle le second élément cylindrique (412) est déplaçable le long de l'axe de rappel (A) jusque dans le premier élément cylindrique (411) et le quatrième élément cylindrique (414) est déplaçable le long de l'axe de rappel (A) jusque dans le troisième élément cylindrique (413), dans lequel l'élément de rappel (416) s'appuie avec sa première extrémité sur une première butée (413a) du troisième élément cylindrique (413) et avec sa seconde extrémité opposée sur une seconde butée (412b) du second élément cylindrique (412),
dans laquelle pendant ou respectivement lors du déplacement, ou après le déplacement du quatrième élément cylindrique (414) le long de l'axe de rappel en direction du premier élément cylindrique (411) une seconde butée (414b) du quatrième élément cylindrique (414) soutient la seconde butée (412b) du second élément cylindrique (412) contre l'élément de rappel (416) et le troisième élément cylindrique (413) s'appuie sur une première butée (411a) du premier élément cylindrique (400),
dans laquelle pendant ou respectivement lors du déplacement ou après le déplacement du quatrième élément cylindrique (414) le long de l'axe de rappel en éloignement du premier élément cylindrique (411), une première butée (414a) du quatrième élément cylindrique (414) déplace le troisième élément cylindrique (413) via une première butée (413a) en direction du quatrième élément cylindrique, pendant qu'une seconde butée (411b) du premier élément cylindrique (411) soutient le second élément cylindrique (412) via sa première butée (412a) contre l'élément de rappel (416),
dans laquelle l'élément de rappel (416), pendant ou respectivement lors d'un déplacement ou après le déplacement du premier élément cylindrique (411) par rapport au quatrième élément cylindrique (414) le long de l'axe de rappel (A), établit une force de rappel entre le second élément cylindrique (412) et le troisième élément cylindrique (413),
**caractérisée en ce que** le rapport de la course de débattement maximum de l'élément de rappel (416) sur la longueur totale de la partie de rappel (41) en position neutre s'élève de 0,3 à 0,8.

12. Partie de rappel (41) selon la revendication 11,
dans laquelle l'élément de rappel (416) remplit sensiblement complètement l'extension, le long de l'axe de rappel (A), occupée par le second élément cylindrique (412) et le troisième élément cylindrique (413).

13. Partie de rappel (41) selon la revendication 11 ou 12,
dans laquelle la première collerette (413a) du troisième cylindre (413) parvient en contact sur la première butée (411a) du premier élément cylindrique (411), pendant que la partie de rappel (41) est comprimée.

14. Partie de rappel (41) selon l'une des revendications 11 à 13,
dans laquelle il est prévu une unité de soutien (419) qui inclut un premier élément de soutien (417) et un second élément de soutien (418),
dans laquelle le premier élément de soutien (417) est immobilisé sur le premier élément cylindrique (411) et le second élément de soutien (418) est immobilisé sur le quatrième élément cylindrique (414),
dans laquelle l'un des éléments de soutien (417, 418) comporte un évidement, dans lequel l'autre élément de soutien respectif (418, 417) est susceptible d'être introduit au moins localement, le long de l'axe de rappel (A), de sorte qu'un pivotement du premier élément cylindrique (411) par rapport au quatrième élément cylindrique (414) le long de l'axe de rappel (A) est empêché.

15. Système de direction, incluant un agencement de direction selon l'une des revendications 1 à 10, et dans celui-ci une partie de rappel (41) selon l'une des revendications 11 à 14.
